# EUROPÄISCHE PATENTANMELDUNG

(11) **EP 1 431 718 A2**
(43) Veröffentlichungstag der Anmeldung: **23.06.2004**
(21) Anmeldenummer: 03023484.3
(22) Anmeldetag: 18.10.2003
(51) Int. Cl.: G01F 1/692

(54) **Strömungssensorelement in Dünnfilmtechnik und seine Verwendung**

(30) Priorität: 20.12.2002 DE 10260896; 12.02.2003 DE 10305694
(71) Anmelder: HERAEUS SENSOR TECHNOLOGY GMBH, D-63450 HANAU (DE)
(72) Erfinder: Wienand, Karlheinz, Dr., 63741 Aschaffenburg (DE); Ullrich, Karlheinz, Dr., 64823 Gross-Umstadt (DE); Muziol, Matthias, 63500 Seligenstadt (DE)
(74) Vertreter: Kühn, Hans-Christian

(57) **Zusammenfassung**

Die Erfindung betrifft ein Strömungssensorelement, das mindestens ein Temperaturmesselement mit mindestens einem Platin-Dünnfilmwiderstand und mindestens ein Heizelement mit mindestens einem Platin-Dünnfilmwiderstand aufweist, wobei das mindestens eine Temperaturmesselement und das mindestens eine Heizelement an einem Trägerelement angeordnet sind, das aus einem Keramikfolien-Laminat oder einem mehrteiligen Keramikbauteil gebildet ist, wobei das Trägerelement elektrische Leiterbahnen und Anschlussflächen zur elektrischen Kontaktierung des mindestens einen Temperaturmesselements sowie des mindestens einen Heizelements aufweist, wobei das mindestens eine Temperaturmesselement und das mindestens eine Heizelement jeweils eine metallische Trägerfolie mit einer elektrisch isolierenden Beschichtung aufweisen, auf welcher die Platin-Dünnfilmwiderstände angeordnet sind. Des weiteren betrifft die Erfindung die Verwendung eines solchen Strömungssensorelements.

## Beschreibung

Die Erfindung betrifft ein Strömungssensorelement, das mindestens ein Temperaturmesselement mit mindestens einem Platin-Dünnfilmwiderstand und mindestens ein Heizelement mit mindestens einem Platin-Dünnfilmwiderstand aufweist, wobei das mindestens eine Temperaturmesselement und das mindestens eine Heizelement an einem Trägerelement angeordnet sind, das aus einem Keramikfolien-Laminat oder einem mehrteiligen Keramikbauteil gebildet ist, wobei das Trägerelement elektrische Leiterbahnen und Anschlussflächen zur elektrischen Kontaktierung des mindestens einen Temperaturmesselements sowie des mindestens einen Heizelements aufweist. Des weiteren betrifft die Erfindung die Verwendung eines solchen Strömungssensorelements.

Derartige Strömungssensorelemente sind aus der EP 1 065 476 A1 bekannt. Hier ist ein thermischer Luftdurchflusssensor offenbart, bei dem ein Sensorelement mit einem Heizwiderstand und einem Widerstandstemperaturmesselement in einer Aussparung eines Keramiklaminatkörpers versenkt angeordnet und mit Keramikzement befestigt ist. Aufgrund der Klebeverbindung und der versenkten Anordnung des Sensorelements mit beziehungsweise in dem Keramiklaminat weist das Sensorelement eine merkliche Reaktionsträgheit bei Temperaturwechseln des Messmediums auf. Die elektrischen Kontakte sind im Strömungsbereich mit einem Epoxidharz bedeckt, so dass ein Einsatz der Vorrichtung bei Temperaturen oberhalb 300°C nicht möglich ist. Zudem ist die Anordnung aufwendig und daher kostenintensiv.

Die noch nicht veröffentlichte Patentanmeldung DE 102 25 602.0-33 der Patentanmelderin offenbart einen Temperatursensor mit einer Gesamtdicke von 10 bis 100 µm, der ein metallisches Foliensubstrat mit einer elektrisch isolierenden Beschichtung aufweist, auf welcher ein Platin-Dünnfilmwiderstand als temperatursensitives Element angeordnet ist. Der Temperatursensor ist im Bereich eines Kühlkörpers für ein Halbleiterbauelement eingesetzt.

Die DE 195 06 231 A1 offenbart ein Heißfilmanemometer mit einem Temperaturmesswiderstand und einem Heizwiderstand. Der Heizwiderstand ist brückenartig in einer Ausnehmung einer Kunststoffträgerplatte angeordnet. Die Platin-Temperatur-Dünnschichtelemente für den Temperaturmesswiderstand und den Heizwiderstand sind auf einem Keramiksubstrat, welches vorzugsweise aus Aluminiumoxid gebildet ist, angeordnet.

Die DE 199 41 420 A1 offenbart ein Sensorelement zur Temperaturmessung auf einem metallischen Substrat, das eine Isolationsschicht als Membrane aufweist. Dabei überspannt die Membrane eine Ausnehmung im metallischen Substrat. Der Platindünnfilm ist dabei im Bereich der Ausnehmung auf der Membrane angeordnet.

Die DE 101 24 964 A1 offenbart einen Sensor zur Messung von Strömungsgeschwindigkeiten von Gasen oder Flüssigkeiten mit einer Trägermembran, die in Form einer Fahne ausgebildet ist. Die Trägermembran ist vorzugsweise aus einem Kunststoff gebildet und weist eine elektrische Leiterbahn aus Platin und elektrische Zuleitungen auf. Der Einsatz eines solchen Sensors mit einer Trägermembran aus Kunststoff ist bei Temperaturen oberhalb 300°C nicht möglich.

Es ist nun Aufgabe der Erfindung, ein schnell ansprechendes Strömungssensorelement zur Messung von Massendurchflüssen von heißen gasförmigen oder flüssigen Medien bereitzustellen.

Die Aufgabe wird für das Strömungssensorelement dadurch gelöst, dass das mindestens eine Temperaturmesselement und das mindestens eine Heizelement jeweils eine metallische Trägerfolie mit einer elektrisch isolierenden Beschichtung aufweisen, auf welcher die Platin-Dünnfilmwiderstände angeordnet sind.
Die Trägerfolie ist entsprechend dünn ausgebildet, so dass eine äußerst geringe thermische Trägheit des Systems und damit eine hohe Ansprechgeschwindigkeit der Platin-Dünnfilmwiderstände resultiert. Zur Bildung eines Keramikfolien-Laminats können entweder keramische Grünfolien ( = ungebrannte Folien ) laminiert und gebrannt werden oder aber bereits gesinterte Keramikfolien eingesetzt werden, die dann vorzugsweise mit einem Glaslot verklebt werden. Die zum Aufbau des Strömungssensorelementes verwendeten Materialien können hervorragend bei Temperaturen im Bereich von - 40°C bis + 800°C eingesetzt werden.

Besonders bevorzugt ist dabei, wenn die metallische Trägerfolie eine Dicke im Bereich von 30µm bis 80µm aufweist. Als Material für die metallische Trägerfolie haben sich Nickel, eine Nickel-Legierung oder eine Eisen-Legierung mit Anteilen an Chrom und Aluminium bewährt.

Weiterhin ist bevorzugt, dass die elektrisch isolierende Beschichtung auf der Trägerfolie eine Dicke im Bereich von 2µm bis 5µm aufweist. Um eine ausreichende Temperaturbeständigkeit der isolierenden Beschichtung zu erhalten, hat es sich bewährt, die elektrisch isolierende Beschichtung aus Keramik zu bilden. Besonders bevorzugt ist es dabei, wenn die elektrisch isolierende Beschichtung aus einer Einzelschicht aus Al₂O₃ und/oder SiO und/oder SiO₂ gebildet ist oder wenn die elektrisch isolierende Beschichtung aus mindestens zwei unterschiedlichen Einzelschichten gebildet ist, wobei die Einzelschichten aus Al₂O₃ und/oder SiO und/oder SiO₂ gebildet sind.

Für die Platin-Dünnfilmwiderstände hat es sich bewährt, wenn diese jeweils eine Dicke im Bereich von 0,5µm bis 1,2µm aufweisen.

Um die Platin-Dünnfilmwiderstände vor einem korrosiven Angriff durch das Messmedium zu schützen, hat es sich bewährt, wenn diese jeweils mit einer Passivierungsschicht bedeckt sind. Die Passivierungsschicht weist dabei vorzugsweise eine Dicke im Bereich von 1µm bis 5µm auf. Besonders hat es sich bewährt, wenn die Passivierungsschicht aus einer Einzelschicht aus Al₂O₃ und/oder SiO und/oder SiO₂ gebildet ist oder wenn die Passivierungsschicht aus mindestens zwei unterschiedlichen Einzelschichten gebildet ist, wobei die Einzelschichten aus Al₂O₃ und/oder SiO und/oder SiO₂ gebildet sind.

Um ein ausgezeichnetes Ansprechverhalten des Strömungssensorelements zu erhalten hat es sich bewährt, wenn die Trägerfolie, die elektrisch isolierende Beschichtung, der mindestens eine Platin-Dünnfilmwiderstand und die Passivierungsschicht des Temperaturmesselements oder des Heizelements eine Gesamtdicke im Bereich von 10µm bis 100µm aufweisen.

Besonders bevorzugt ist es, wenn das mindestens eine Temperaturmesselement eine rechteckige Trägerfolie mit zwei langen und zwei schmalen Kanten aufweist und dass die Trägerfolie im Bereich einer der schmalen Kanten zwischen Keramikfolien des Keramikfolien-Laminats oder zwischen mindestens zwei Teilen des Keramikbauteils angeordnet ist.

Ebenso ist es bevorzugt, wenn das mindestens eine Heizelement eine rechteckige Trägerfolie mit zwei langen und zwei schmalen Kanten aufweist und dass die Trägerfolie im Bereich einer der schmalen Kanten zwischen Keramikfolien des Keramikfolien-Laminats oder zwischen mindestens zwei Teilen des Keramikbauteils angeordnet ist.

Die Platin-Dünnfilmwiderstände werden dabei vorzugsweise an dem, dem Keramikfolien-Laminat oder den Keramikbauteilen abgewandten Ende der Trägerfolien angeordnet, um eine möglichst geringe thermische Beeinflussung der Platin-Dünnfilmwiderstände durch das thermisch träge Keramikfolien-Laminat oder die thermisch trägen Keramikbauteile zu gewährleisten.

Um eine gegenseitige Beeinflussung von Temperaturmesselement und Heizelement zu unterbinden, ist es von Vorteil, wenn der mindestens eine Platin-Dünnfilmwiderstand des Heizelements weiter vom Keramikfolien-Laminat oder vom Keramikbauteil entfernt angeordnet ist als der mindestens eine Platin-Dünnfilmwiderstand des Temperaturmesselements. Dadurch sind die Platin-Dünnfilmwiderstände des Heizelements nicht in der gleichen Strömungsfaser des Messmediums angeordnet wie die Platin-Dünnfilmwiderstände des Temperaturmesselements.

Vorzugsweise sind die Trägerfolien des mindestens einen Heizelements und des mindestens einen Temperaturmesselements beabstandet voneinander in Serie zwischen gleichen Keramikfolien oder Teilen des Keramikbauteils angeordnet.
Dabei hat es sich bewährt, wenn das Keramikfolien-Laminat aus zwei Keramikfolien gebildet ist oder wenn das Keramikbauteil aus zwei Keramikrohren, deren Wandungen im Querschnitt jeweils ein Halbmondprofil aufweisen, gebildet ist.

Es hat sich insbesondere zur Messung von Medien mit wechselnder Strömungsrichtung bewährt, wenn ein Temperaturmesselement, zwei Heizelemente und ein Temperaturmesselement in Serie angeordnet sind.

Weiterhin haben sich Anordnungen bewährt, bei welchen das Keramikfolien-Laminat aus drei Keramikfolien gebildet ist.
Dabei hat es sich insbesondere bewährt , wenn die Trägerfolien des mindestens einen Heizelements und des mindestens einen Temperaturmesselements durch Keramikfolien beabstandet voneinander und parallel zueinander angeordnet sind.

Es ist bevorzugt, ein Heizelement zwischen einer ersten und einer zweiten Keramikfolie und ein Temperaturmesselement zwischen der zweiten und einer dritten Keramikfolie der drei Keramikfolien anzuordnen, wobei das Heizelement und das Temperaturmesselement auf gleicher Höhe des Keramikfolien-Laminats nebeneinander angeordnet sind.

Außerdem hat es sich bewährt, wenn ein Heizelement zwischen einer ersten und einer zweiten Keramikfolie der drei Keramikfolien angeordnet ist und dass zwei Temperaturmesselemente zwischen der zweiten und einer dritten Keramikfolie der drei Keramikfolien angeordnet sind, wobei das Heizelement zwischen den Temperaturmesselementen angeordnet ist.

Weiterhin haben sich Anordnungen bewährt, bei welchen das Keramikfolien-Laminat aus vier Keramikfolien gebildet ist.

Dabei ist es bevorzugt, wenn ein erstes Temperaturmesselement zwischen einer ersten und einer zweiten Keramikfolie der vier Keramikfolien und ein zweites Temperaturmesselement zwischen einer dritten und einer vierten Keramikfolie der vier Keramikfolien angeordnet ist und dass ein Heizelement zwischen der zweiten und der dritten Keramikfolie angeordnet ist, wobei das Heizelement und die Temperaturmesselemente auf gleicher Höhe des Keramikfolien-Laminats nebeneinander angeordnet sind.

Weiterhin ist es bevorzugt, wenn ein erstes Temperaturmesselement zwischen einer ersten und einer zweiten Keramikfolie der vier Keramikfolien und ein zweites Temperaturmesselement zwischen einer dritten und einer vierten Keramikfolie der vier Keramikfolien angeordnet ist und dass ein Heizelement zwischen der zweiten und der dritten Keramikfolie angeordnet ist, wobei die Temperaturmesselemente auf gleicher Höhe des Keramikfolien-Laminat nebeneinander angeordnet sind und das Heizelement versetzt zu den Temperaturmesselementen angeordnet ist.

Die Verwendung eines erfindungsgemäßen Strömungssensorelements zur Massendurchflussmessung gasförmiger oder flüssiger Medien durch Rohrleitungen, wobei die Trägerfolien parallel zur Strömungsrichtung des Mediums angeordnet sind, ist ideal.

Dabei eignet sich das erfindungsgemäße Strömungssensorelement insbesondere zur Messung an gasförmigen Medien mit einer Temperatur im Bereich von - 40°C bis + 800°C, wie sie beispielsweise das Abgas einer Verbrennungskraftmaschine aufweist.

Das erfindungsgemäße Strömungssensorelement eignet sich aber auch zur Messung an flüssigen Medien mit einer Temperatur im Bereich von 0°C bis 150°C.

Die Anordnung vom mehreren Temperaturmesselementen und Heizelementen an dem Trägerelement ermöglicht in idealer Weise auch die Erkennung der Strömungsrichtung bzw. von Strömungsrichtungsänderungen eines Mediums. Insofern ist es vorteilhaft, das erfindungsgemäße Strömungssensorelement zur Messung an Medien mit sich in zeitlichen Abständen ändernder Strömungsrichtung einzusetzen.

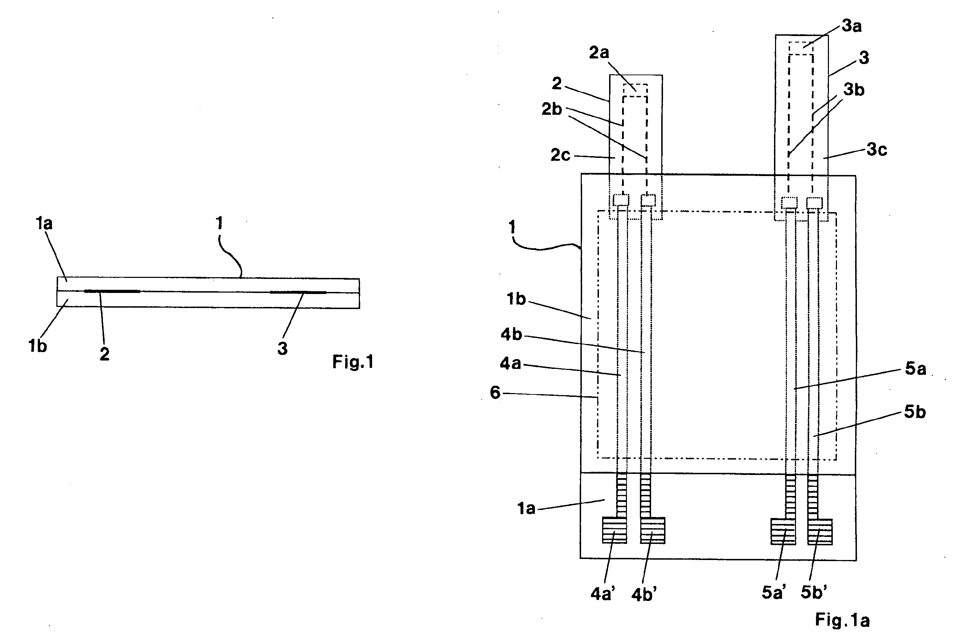

Die Figuren 1 bis 9a sollen das erfindungsgemäße Strömungssensorelement lediglich beispielhaft erläutern. Es sei hier deshalb ausdrücklich hinzugefügt, dass die Anordnung der elektrischen Leiterbahnen und Anschlussflächen sowie die Anzahl der Platin-Dünnfilme pro Temperaturmesselement oder Heizelement auch anders gewählt sein kann, ohne dass der Bereich der Erfindung verlassen wird.
So zeigt:
- Figur 1: ein Strömungssensorelement mit zweischichtigem Keramikfolien-Laminat und einem Temperaturmesselement und einem Heizelement ( Draufsicht von Fig. 1a )
- Figur 1a: das Strömungssensorelement aus Fig. 1 in Seitenansicht
- Figur 2: ein Strömungssensorelement mit zweischichtigem Keramikfolien-Laminat und zwei Temperaturmesselementen und zwei Heizelementen ( Draufsicht von Fig. 2a )
- Figur 2a: das Strömungssensorelement aus Fig. 2 in Seitenansicht
- Figur 3: ein Strömungssensorelement mit zweischichtigem Keramikfolien-Laminat und zwei Temperaturmesselementen und einem Doppelheizelement ( Draufsicht von Fig. 3a )
- Figur 3a: das Strömungssensorelement aus Fig. 3 in Seitenansicht
- Figur 4: ein Strömungssensorelement mit dreischichtigem Keramikfolien-Laminat, zwei Temperaturmesselementen und einem Doppelheizelement in Draufsicht
- Figur 5: ein Strömungssensorelement mit dreischichtigem Keramikfolien-Laminat, einem Temperaturmesselement und einem Heizelement in Draufsicht
- Figur 6: ein Strömungssensorelement mit dreischichtigem Keramikfolien-Laminat, einem Temperaturmesselement und einem Heizelement in Draufsicht
- Figur 6a: das Strömungssensorelement aus Fig. 6 in Seitenansicht
- Figur 6b: das Strömungssensorelement aus Fig. 6a in Seitenansicht
- Figur 7: ein Strömungssensorelement mit vierschichtigem Keramikfolien-Laminat, zwei
- Figur 8: Temperaturmesselementen und einem Doppelheizelement in Draufsicht ein Strömungssensorelement mit vierschichtigem Keramikfolien-Laminat, zwei Temperaturmesselementen und einem Doppelheizelement in Draufsicht
- Figur 9: ein Strömungssensorelement mit mehrteiligem Keramikbauteil, einem Temperaturmesselement und einem Heizelement im Querschnitt A - A' ( siehe Fig. 9a )
- Figur 9a: das Strömungssensorelement aus Fig. 9 in Seitenansicht

Figur 1 zeigt ein Strömungssensorelement mit einem Keramikfolien-Laminat 1, das aus einer ersten Keramikfolie 1a aus Al₂O₃ und einer zweiten Keramikfolie 1b aus Al₂O₃ gebildet ist. Zwischen der ersten Keramikfolie 1a und der zweiten Keramikfolie 1b sind ein Temperaturmesselement 2 und ein Heizelement 3 teilweise eingebettet und elektrisch kontaktiert. Mit diesem Strömungssensorelement ist es nicht möglich, die Strömungsrichtung eines Mediums zu erkennen.
Prinzipiell erfolgt die Messung des Massendurchflusses nach dem Prinzip des Heißfilmanemometers. Das Heizelement 3 wird dabei durch eine elektrische Regelschaltung ( Brückenschaltung und Verstärker in einem Regelkreis ) entweder auf einer konstanten Temperatur ( z.B. von 450°C ) oder einer konstanten Temperaturdifferenz (z.B. von 150 K ) zum Temperaturmesselement 2 gehalten. Eine Änderung im Massenfluss des Mediums ruft nun eine Änderung der Leistungsaufnahme des Heizelementes 3 hervor, die elektronisch auswertbar ist und in direkten Bezug zum Massenfluss steht.

Figur 1a zeigt das Strömungssensorelement aus Fig. 1 in Seitenansicht. Dabei ist erkennbar, dass das Temperaturmesselement 2 und das Heizelement 3 über elektrische Leiterbahnen 4a, 4b, 5a, 5b mit Anschlussflächen 4a', 4b', 5a', 5b' elektrisch kontaktiert sind. Die elektrischen Leiterbahnen 4a, 4b, 5a, 5b sind auf der ersten Keramikfolie 1 a angeordnet und teilweise von der zweiten Keramikfolie 1b bedeckt. Daher ist ihre Lage teilweise gestrichelt angedeutet. Das Temperaturmesselement 2 weist eine Trägerfolie 2c mit einer hier nicht dargestellten elektrisch isolierenden Beschichtung bestehend aus einer Einzelschicht aus Al₂O₃ oder SiO₂ auf. Ein Platin-Dünnfilmelement 2a zur Temperaturmessung und seine elektrischen Anschlussleitungen 2b sind auf der Rückseite der Trägerfolie 2c inklusive elektrisch isolierender Beschichtung angeordnet und deren Lage daher gestrichelt dargestellt. Das Heizelement 3 weist eine Trägerfolie 3c mit einer hier nicht dargestellten elektrisch isolierenden Beschichtung bestehend aus einer Einzelschicht aus Al₂O₃ oder SiO₂ auf. Ein Platin-Dünnfilmelement 3a als Heizer und seine elektrischen Anschlussleitungen 3b sind auf der Rückseite der Trägerfolie 3c inklusive elektrisch isolierender Beschichtung angeordnet und deren Lage daher gestrichelt dargestellt. Die Keramikfolien 1a, 1b sind im Bereich 6 entweder durch direktes miteinander Versintern oder über ein Glaslot verbunden. Die Anschlussflächen 4a', 4b', 5a', 5b' sind von der zweiten Keramikfolie 1b unbedeckt, damit eine Verbindung mit hier nicht dargestellten elektrischen Anschlusskabeln erfolgen kann.

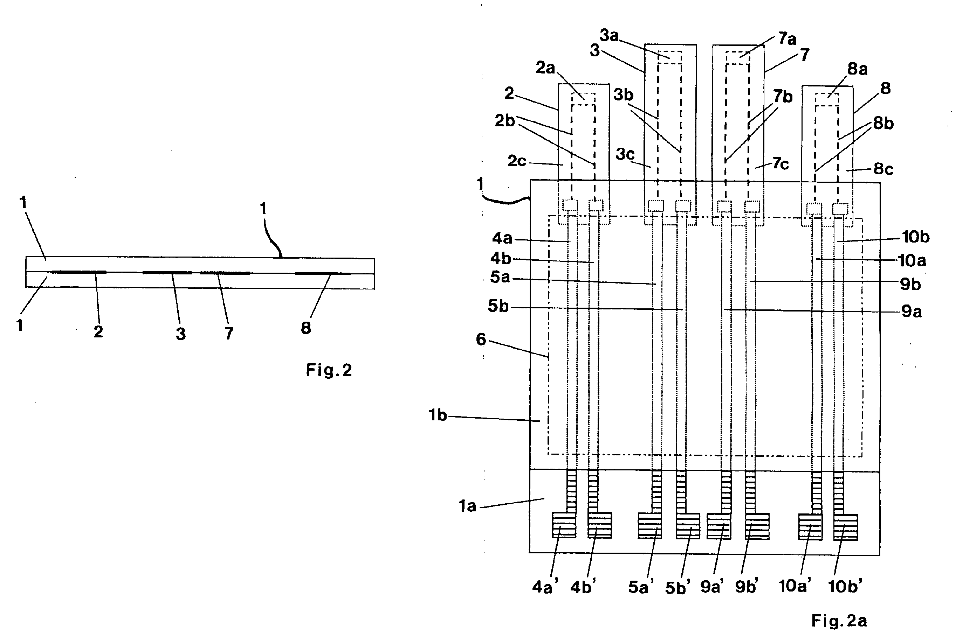

Figur 2 zeigt ein Strömungssensorelement mit einem Keramikfolien-Laminat 1, das aus einer ersten Keramikfolie 1a aus Al₂O₃ und einer zweiten Keramikfolie 1b aus Al₂O₃ gebildet ist. Zwischen der ersten Keramikfolie 1a und der zweiten Keramikfolie 1b sind zwei Temperaturmesselemente 2, 8 und zwei Heizelemente 3, 7 teilweise eingebettet und elektrisch kontaktiert.
Die Messung erfolgt wiederum prinzipiell nach dem Prinzip des Heißfilmanemometers, wie bereits unter Figur 1 beschrieben. Die Anzahl der Heizelementen 3, 7 und Temperaturmesselementen 2, 8 erlaubt es nun aber, jeweils einen elektrischen Regelkreis für je ein Heizelement und je ein Temperaturmesselement ( 2 und 3 bzw. 7 und 8 ) zu bilden und auszuwerten. Mit diesem Strömungssensorelement ist es nun möglich, die Strömungsrichtung eines Mediums zu erkennen, da ein Übertrag an thermischer Energie von dem Heizelement, das in Strömungsrichtung zuerst angeordnet ist, an das nachfolgende Heizelement erfolgt. Die Temperaturänderung beziehungsweise Erwärmung des nachfolgenden Heizelementes führt zu einer geringeren Leistungsaufnahme dieses Heizelementes, was als Signal für die Strömungsrichtung des Mediums ausgewertet werden kann.

Figur 2a zeigt das Strömungssensorelement aus Fig. 2 in Seitenansicht. Dabei ist erkennbar, dass die Temperaturmessetemente 2, 8 und die Heizelemente 3, 7 über elektrische Leiterbahnen 4a, 4b, 5a, 5b, 9a, 9b, 10a, 10b mit Anschlussflächen 4a', 4b', 5a', 5b', 9a', 9b', 10a', 10b' elektrisch kontaktiert sind. Die elektrischen Leiterbahnen 4a, 4b, 5a; 5b, 9a, 9b, 10a, 10b sind auf der ersten Keramikfolie 1a angeordnet und teilweise von der zweiten Keramikfolie 1b bedeckt. Daher ist ihre Lage teilweise gestrichelt angedeutet. Das Temperaturmesselement 2 weist eine Trägerfolie 2c mit einer hier nicht dargestellten elektrisch isolierenden Beschichtung bestehend aus zwei Einzelschichten aus Al₂O₃ und SiO₂ auf. Ein Platin-Dünnfilmelement 2a zur Temperaturmessung und seine elektrischen Anschlussleitungen 2b sind auf der Rückseite der Trägerfolie 2c inklusive elektrisch isolierender Beschichtung angeordnet und deren Lage daher gestrichelt dargestellt. Das Heizelement 3 weist eine Trägerfolie 3c mit einer hier nicht dargestellten elektrisch isolierenden Beschichtung bestehend aus zwei Einzelschichten aus Al₂O₃ und SiO₂ auf. Ein Platin-Dünnfilmelement 3a als Heizer und seine elektrischen Anschlussleitungen 3b sind auf der Rückseite der Trägerfolie 3c inklusive elektrisch isolierender Beschichtung angeordnet und deren Lage daher gestrichelt dargestellt. Das Heizelement 7 weist eine Trägerfolie 7c mit einer hier nicht dargestellten elektrisch isolierenden Beschichtung bestehend aus zwei Einzelschichten aus Al₂O₃ und SiO₂ auf. Ein Platin-Dünnfilmelement 7a als Heizer und seine elektrischen Anschlussleitungen 7b sind auf der Rückseite der Trägerfolie 7c inklusive elektrisch isolierender Beschichtung angeordnet und deren Lage daher gestrichelt dargestellt. Das Temperaturmesselement 8 weist eine Trägerfolie 8c mit einer hier nicht dargestellten elektrisch isolierenden Beschichtung bestehend aus zwei Einzelschichten aus Al₂O₃ und SiO₂ auf. Ein Platin-Dünnfilmelement 8a zur Temperaturmessung und seine elektrischen Anschlussleitungen 8b sind auf der Rückseite der Trägerfolie 8c inklusive elektrisch isolierender Beschichtung angeordnet und deren Lage daher gestrichelt dargestellt.
Die Keramikfolien 1a, 1b sind im Bereich 6 entweder durch direktes miteinander Versintern oder über ein Glaslot verbunden. Die Anschlussflächen 4a', 4b', 5a', 5b', 9a', 9b', 10a', 10b' sind von der zweiten Keramikfolie 1b unbedeckt, damit eine Verbindung mit hier nicht dargestellten elektrischen Anschlusskabeln erfolgen kann.

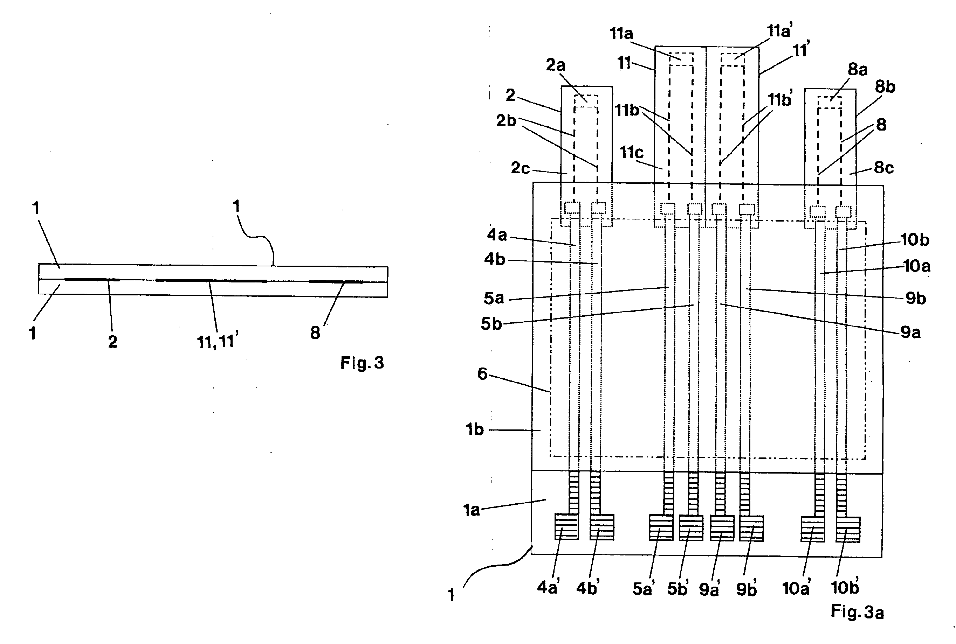

Figur 3 zeigt ein Strömungssensorelement mit einem Keramikfolien-Laminat 1, das aus einer ersten Keramikfolie 1a aus Al₂O₃ und einer zweiten Keramikfolie 1b aus Al₂O₃ gebildet ist. Zwischen der ersten Keramikfolie 1a und der zweiten Keramikfolie 1b sind zwei Temperaturmesselemente 2, 8 und ein Doppelheizelement 11, 11' teilweise eingebettet und elektrisch kontaktiert. Unter einem Doppelheizelement wird hier verstanden, dass zwei Heizelemente, die elektrisch getrennt angesteuert werden können, mit einer gemeinsamen beschichteten Trägerfolie ausgeführt sind. Auch mit diesem Strömungssensorelement ist es möglich, die Strömungsrichtung eines Mediums zu erkennen.

Figur 3a zeigt das Strömungssensorelement aus Fig. 3 in Seitenansicht. Dabei ist erkennbar, dass die Temperaturmesselemente 2, 8 und das Doppelheizelement 11, 11' über elektrische Leiterbahnen 4a, 4b, 5a, 5b, 9a, 9b, 10a, 10b mit Anschlussflächen 4a', 4b', 5a', 5b', 9a', 9b', 10a', 10b' elektrisch kontaktiert sind. Die elektrischen Leiterbahnen 4a, 4b, 5a, 5b, 9a, 9b, 10a, 10b sind auf der ersten Keramikfolie 1 a angeordnet und teilweise von der zweiten Keramikfolie 1b bedeckt. Daher ist ihre Lage teilweise gestrichelt angedeutet. Das Temperaturmesselement 2 weist eine Trägerfolie 2c mit einer hier nicht dargestellten elektrisch isolierenden Beschichtung bestehend aus einer Einzelschicht aus Al₂O₃ auf. Ein Platin-Dünnfilmelement 2a zur Temperaturmessung und seine elektrischen Anschlussleitungen 2b sind auf der Rückseite der Trägerfolie 2c inklusive elektrisch isolierender Beschichtung angeordnet und deren Lage daher gestrichelt dargestellt. Das Doppelheizelement 11, 11' weist eine Trägerfolie 11c mit einer hier nicht dargestellten elektrisch isolierenden Beschichtung bestehend aus zwei Einzelschichten aus Al₂O₃ und SiO₂ auf. Platin-Dünnfilmelemente 11a, 11a' als Heizer und deren elektrischen Anschlussleitungen 11b, 11b' sind auf der Rückseite der Trägerfolie 11 c inklusive elektrisch isolierender Beschichtung angeordnet und deren Lage daher gestrichelt dargestellt. Das Temperaturmesselement 8 weist eine Trägerfolie 8c mit einer hier nicht dargestellten elektrisch isolierenden Beschichtung bestehend aus zwei Einzelschichten aus Al₂O₃ und SiO₂ auf. Ein Platin-Dünnfilmelement 8a zur Temperaturmessung und seine elektrischen Anschlussleitungen 8b sind auf der Rückseite der Trägerfolie 8c inklusive elektrisch isolierender Beschichtung angeordnet und deren Lage daher gestrichelt dargestellt.
Die Keramikfolien 1a, 1b sind im Bereich 6 direktes miteinander Versintern oder ein Glaslot verbunden. Die Anschlussflächen 4a', 4b', 5a', 5b', 9a', 9b', 10a', 10b' sind von der zweiten Keramikfolie 1b unbedeckt, damit eine Verbindung mit hier nicht dargestellten elektrischen Anschlusskabeln erfolgen kann.

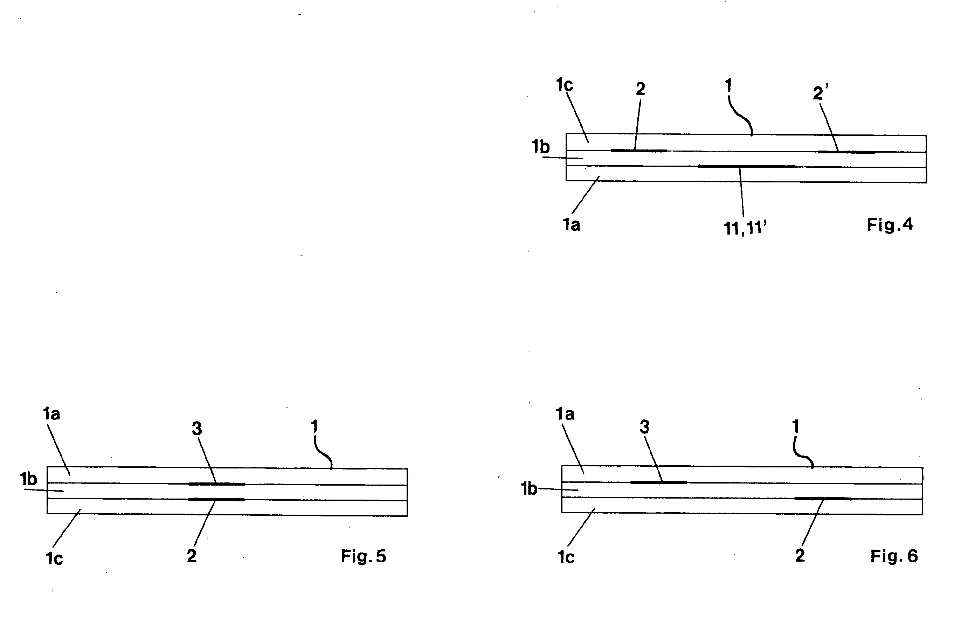

Figur 4 zeigt ein Strömungssensorelement mit einem Keramikfolien-Laminat 1, das aus einer ersten Keramikfolie 1a, einer zweiten Keramikfolie 1b und einer dritten Keramikfolie 1c aus Al₂O₃ gebildet ist. Zwischen der ersten Keramikfolie 1a und der zweiten Keramikfolie 1b sind zwei Temperaturmesselemente 2, 2' teilweise eingebettet und elektrisch kontaktiert. Zwischen der zweiten Keramikfolie 1b und der dritten Keramikfolie 1 c ist ein Doppelheizelement 11, 11' teilweise eingebettet und elektrisch kontaktiert. Mit diesem Strömungssensorelement ist es, die Strömungsrichtung eines Mediums zu erkennen.

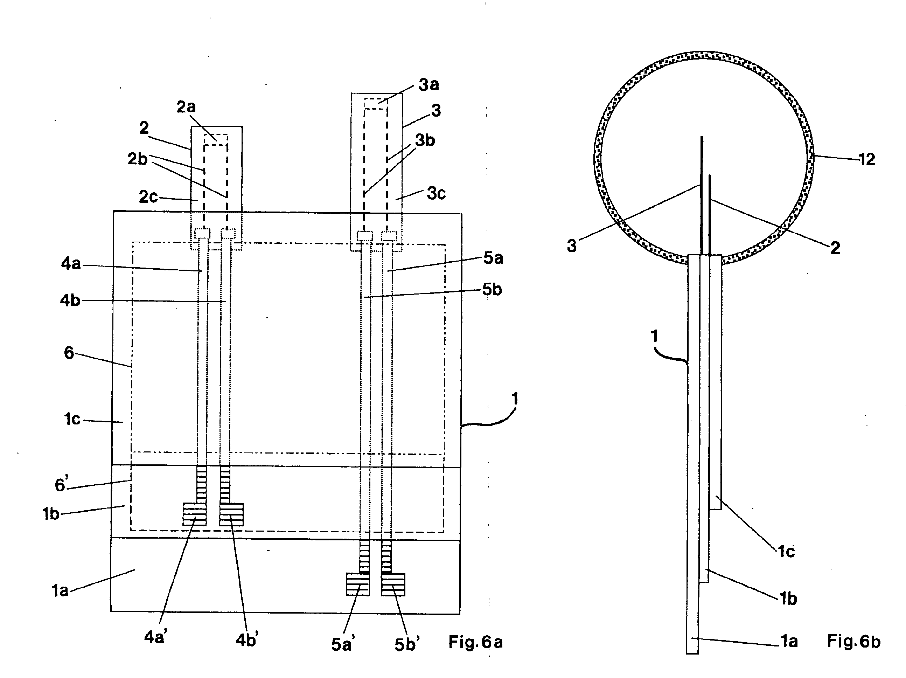

Figur 5 und Figur 6 zeigen jeweils ein Strömungssensorelement mit einem Keramikfolien-Laminat 1, das aus einer ersten Keramikfolie 1a, einer zweiten Keramikfolie 1b und einer dritten Keramikfolie 1c aus Al₂O₃ gebildet ist. Zwischen der ersten Keramikfolie 1a und der zweiten Keramikfolie 1b ist ein Temperaturmesselement 2 teilweise eingebettet und elektrisch kontaktiert. Zwischen der zweiten Keramikfolie 1b und der dritten Keramikfolie 1c ist ein Heizelement 3 teilweise eingebettet und elektrisch kontaktiert. Mit diesen Strömungssensorelementen ist es nicht möglich, die Strömungsrichtung eines Mediums zu erkennen.

Figur 6a zeigt das Strömungssensorelement aus Fig. 6 in Seitenansicht. Dabei ist erkennbar, dass das Temperaturmesselement 2 und das Heizelement 3 über elektrische Leiterbahnen 4a, 4b, 5a, 5b mit Anschlussflächen 4a', 4b', 5a', 5b' elektrisch kontaktiert sind. Die elektrischen Leiterbahnen 5a, 5b sind auf der ersten Keramikfolie 1a angeordnet und teilweise von der zweiten Keramikfolie 1b bedeckt. Daher ist ihre Lage teilweise gestrichelt angedeutet. Die elektrischen Leiterbahnen 4a, 4b sind auf der zweiten Keramikfolie 1b angeordnet und teilweise von der dritten Keramikfolie 1c bedeckt. Daher ist ihre Lage teilweise gestrichelt angedeutet. Das Temperaturmesselement 2 weist eine Trägerfolie 2c mit einer hier nicht dargestellten elektrisch isolierenden Beschichtung bestehend aus einer Einzelschicht aus SiO₂ auf. Ein Platin-Dünnfilmelement 2a zur Temperaturmessung und seine elektrischen Anschlussleitungen 2b sind auf der Rückseite der Trägerfolie 2c inklusive elektrisch isolierender Beschichtung angeordnet und deren Lage daher gestrichelt dargestellt. Das Heizelement 3 weist eine Trägerfolie 3c mit einer hier nicht dargestellten elektrisch isolierenden Beschichtung bestehend aus einer Einzelschicht aus SiO₂ auf. Ein Platin-Dünnfilmelement 3a als Heizer und seine elektrischen Anschlussleitungen 3b sind auf der Rückseite der Trägerfolie 3c inklusive elektrisch isolierender Beschichtung angeordnet und deren Lage daher gestrichelt dargestellt.
Die Keramikfolien 1a, 1b sind im Bereich 6' entweder durch direktes miteinander Versintern oder über ein Glaslot verbunden. Die Anschlussflächen 5a', 5b' sind von der zweiten Keramikfolie 1b unbedeckt, damit eine Verbindung mit hier nicht dargestellten elektrischen Anschlusskabeln erfolgen kann. Die Keramikfolien 1b, 1c sind im Bereich 6 entweder durch direktes miteinander Versintern oder über ein Glaslot verbunden. Die Anschlussflächen 4a', 4b' sind von der dritten Keramikfolie 1c unbedeckt, damit eine Verbindung mit hier nicht dargestellten elektrischen Anschlusskabeln erfolgen kann.

Figur 6b zeigt das Strömungssensorelement aus Fig. 6a in Seitenansicht, wobei dieses in den Querschnitt einer Rohrleitung 12 eingebaut. Das die Trägerfolien 2c, 3c des Temperaturmesselement 2 und des Heizelement 3 sind dabei parallel zur Strömungsrichtung in die Rohrleitung eingebracht.

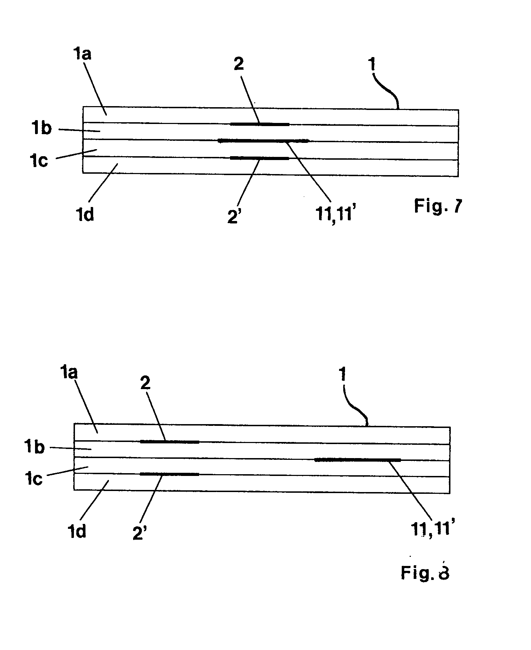

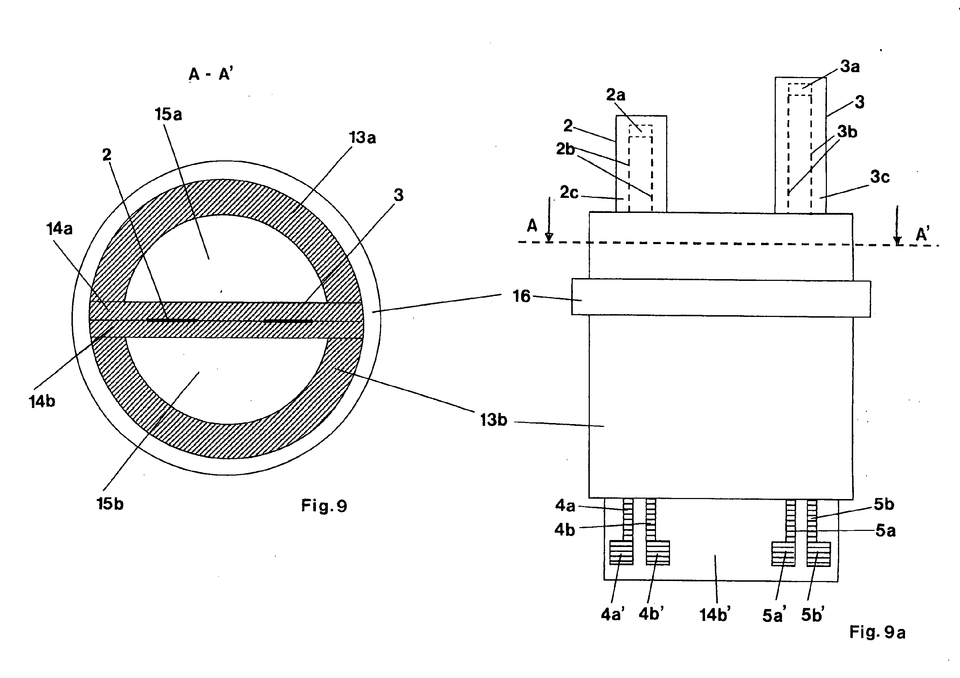

Figur 7 und Figur 8 zeigen jeweils ein Strömungssensorelement mit einem Keramikfolien-Laminat 1, das aus einer ersten Keramikfolie 1a, einer zweiten Keramikfolie 1b, einer dritten Keramikfolie 1c und einer vierten Keramikfolie 1d aus Al₂O₃ gebildet ist. Zwischen der ersten Keramikfolie 1a und der zweiten Keramikfolie 1b ist ein Temperaturmesselement 2 teilweise eingebettet und elektrisch kontaktiert. Zwischen der zweiten Keramikfolie 1b und der dritten Keramikfolie 1c ist ein Doppelheizelement 11, 11' teilweise eingebettet und elektrisch kontaktiert. Zwischen der dritten Keramikfolie 1c und der vierten Keramikfolie 1d ist ein weiteres Temperaturmesselement 2' teilweise eingebettet und elektrisch kontaktiert. Mit diesen Strömungssensorelementen ist es nicht möglich, die Strömungsrichtung eines Mediums zu erkennen.

Figur 9 zeigt ein Strömungssensorelement im Querschnitt A - A' ( siehe Fig. 9a ) mit einem mehrteiligem Keramikbauteil 13a, 13b, 14a, 14b aus Al₂O₃, das ein Temperaturmesselement 2 und ein Heizelement 3 aufweist. Das Keramikbauteil 13a, 13b, 14a, 14b weist zwei Hohlräume 15a, 15b auf, die im Bereich des Temperaturmesselementes 2 beziehungsweise des Heizelementes 3 gasdicht verschlossen sind. Zum Einbau in eine Rohrleitung ist ein Anschlussflansch 16 vorhanden. Auch mit diesem Strömungssensorelement ist es nicht möglich, die Strömungsrichtung eines Mediums zu erkennen.

Figur 9a zeigt das Strömungssensorelement aus Fig. 9 in Seitenansicht. Dabei sind das Temperaturmesselement 2 und das Heizelement 3 über hier nur teilweise erkennbare elektrische Leiterbahnen 4a, 4b, 5a, 5b mit Anschlussflächen 4a', 4b', 5a', 5b' elektrisch kontaktiert. Die elektrischen Leiterbahnen 4a, 4b, 5a, 5b sind auf einer Keramikplatte 14a angeordnet und - in dieser Darstellung nicht sichtbar - teilweise von einer zweiten Keramikplatte 14b bedeckt. Das Temperaturmesselement 2 weist eine Trägerfolie 2c mit einer hier nicht dargestellten elektrisch isolierenden Beschichtung bestehend aus einer Einzelschicht aus Al₂O₃ oder SiO₂ auf. Ein Platin-Dünnfilmelement 2a zur Temperaturmessung und seine elektrischen Anschlussleitungen 2b sind auf der Rückseite der Trägerfolie 2c inklusive elektrisch isolierender Beschichtung angeordnet und deren Lage daher gestrichelt dargestellt. Das Heizelement 3 weist eine Trägerfolie 3c mit einer hier nicht dargestellten elektrisch isolierenden Beschichtung bestehend aus einer Einzelschicht aus Al₂O₃ oder SiO₂ auf. Ein Platin-Dünnfilmelement 3a als Heizer und seine elektrischen Anschlussleitungen 3b sind auf der Rückseite der Trägerfolie 3c inklusive elektrisch isolierender Beschichtung angeordnet und deren Lage daher gestrichelt dargestellt.
Die Keramikplatten 14a, 14b sind entweder durch direktes miteinander Versintern oder über ein Glaslot miteinander und mit Rohrschalen 13a, 13b zum Keramikbauteil verbunden. Es ist aber auch möglich, zwei Halbrohre ( 13a plus 14a ; 13b plus 14b ) zu verwenden, bei denen die Keramikplatte 14a und die Rohrschale 13a beziehungsweise die Keramikplatte 14b und die Rohrschale 14b zu jeweils einem einstückigen Bauteil zusammengefasst sind. Die Anschlussflächen 4a', 4b', 5a', 5b' sind von der zweiten Keramikplatte 14b unbedeckt, damit eine Verbindung mit hier nicht dargestellten elektrischen Anschlusskabeln erfolgen kann.

## Patentansprüche

1. Strömungssensorelement, das mindestens ein Temperaturmesselement mit mindestens einem Platin-Dünnfilmwiderstand und mindestens ein Heizelement mit mindestens einem Platin-Dünnfilmwiderstand aufweist, wobei das mindestens eine Temperaturmesselement und das mindestens eine Heizelement an einem Trägerelement angeordnet sind, das aus einem Keramikfolien-Laminat oder einem mehrteiligen Keramikbauteil gebildet ist, wobei das Trägerelement elektrische Leiterbahnen und Anschlussflächen zur elektrischen Kontaktierung des mindestens einen Temperaturmesselements sowie des mindestens einen Heizelements aufweist, **dadurch gekennzeichnet, dass** das mindestens eine Temperaturmesselement (2, 2', 8) und das mindestens eine Heizelement (3, 3', 7, 11, 11') jeweils eine metallische Trägerfolie (2c, 3c, 7c, 8c, 11c) mit einer elektrisch isolierenden Beschichtung aufweisen, auf welcher die Platin-Dünnfilmwiderstände (2a, 3a, 7a, 8a, 11a, 11a') angeordnet sind.

2. Strömungssensorelement nach Anspruch 1, **dadurch gekennzeichnet, dass** die metallische Trägerfolie (2c, 3c, 7c, 8c, 11c) eine Dicke im Bereich von 30µm bis 80µm aufweist.

3. Strömungssensorelement nach einem der Ansprüche 1 bis 2, **dadurch gekennzeichnet, dass** die metallische Trägerfolie (2c, 3c, 7c, 8c, 11c) aus Nickel, einer Nickel-Legierung oder einer Eisen-Legierung mit Anteilen an Chrom und Aluminium gebildet ist.

4. Strömungssensorelement nach einem der Ansprüche 1 bis 3, **dadurch gekennzeichnet, dass** die elektrisch isolierende Beschichtung eine Dicke im Bereich von 2µm bis 5µm aufweist.

5. Strömungssensorelement nach einem der Ansprüche 1 bis 4, **dadurch gekennzeichnet, dass** die elektrisch isolierende Beschichtung aus Keramik gebildet ist.

6. Strömungssensorelement nach Anspruch 5, **dadurch gekennzeichnet, dass** die elektrisch isolierende Beschichtung aus einer Einzelschicht aus Al₂O₃ und/oder SiO und/oder SiO₂ gebildet ist oder dass die elektrisch isolierende Beschichtung aus mindestens zwei unterschiedlichen Einzelschichten gebildet ist, wobei die Einzelschichten aus Al₂O₃ und/oder SiO und/oder SiO₂ gebildet sind.

7. Strömungssensorelement nach einem der Ansprüche 1 bis 6, **dadurch gekennzeichnet, dass** die Platin-Dünnfilmwiderstände (2a, 3a, 7a, 8a, 11a, 11a') jeweils eine Dicke im Bereich von 0,5µm bis 1,2µm aufweisen.

8. Strömungssensorelement nach einem der Ansprüche 1 bis 7, **dadurch gekennzeichnet, dass** die Platin-Dünnfilmwiderstände (2a, 3a, 7a, 8a, 11a, 11a') jeweils mit einer Passivierungsschicht bedeckt sind.

9. Strömungssensorelement nach Anspruch 8, **dadurch gekennzeichnet, dass** die Passivierungsschicht eine Dicke im Bereich von 1µm bis 5µm aufweist.

10. Strömungssensorelement nach Anspruch 9, **dadurch gekennzeichnet, dass** die Passivierungsschicht aus einer Einzelschicht aus Al₂O₃ und/oder SiO und/oder SiO₂ gebildet ist oder dass die Passivierungsschicht aus mindestens zwei unterschiedlichen Einzelschichten gebildet ist, wobei die Einzelschichten aus Al₂O₃ und/oder SiO und/oder SiO₂ gebildet sind.

11. Strömungssensorelement nach einem der Ansprüche 1 bis 10, **dadurch gekennzeichnet, dass** die Trägerfolie (2c, 3c, 7c, 8c, 11c), die elektrisch isolierende Beschichtung, der mindestens eine Platin-Dünnfilmwiderstand (2a, 3a, 7a, 8a, 11a, 11a') und die Passivierungsschicht des Temperaturmesselements (2, 2', 8) oder des Heizelements (3, 3', 7, 11, 11') eine Gesamtdicke im Bereich von 10µm bis 100µm aufweisen.

12. Strömungssensorelement nach einem der Ansprüche 1 bis 11, **dadurch gekennzeichnet, dass** das mindestens eine Temperaturmesselement (2, 2', 8) eine rechteckige Trägerfolie (2c, 8c) mit zwei langen und zwei schmalen Kanten aufweist und dass die Trägerfolie (2c, 8c) im Bereich einer der schmalen Kanten zwischen Keramikfolien (1a, 1b, 1c, 1d) des Keramikfolien-Laminats (1) oder zwischen mindestens zwei Teilen (14a, 14b) des Keramikbauteils (13a, 13b, 14a, 14b) angeordnet ist.

13. Strömungssensorelement nach einem der Ansprüche 1 bis 12, **dadurch gekennzeichnet, dass** das mindestens eine Heizelement (3, 3', 7, 11, 11') eine rechteckige Trägerfolie (3c, 7c, 11c) mit zwei langen und zwei schmalen Kanten aufweist und dass die Trägerfolie (3c, 7c, 11c) im Bereich einer der schmalen Kanten zwischen Keramikfolien des Keramikfolien-Laminats (1) oder zwischen mindestens zwei Teilen (14a, 14b) des Keramikbauteils (13a, 13b, 14a, 14b) angeordnet ist.

14. Strömungssensorelement nach einem der Ansprüche 12 und 13, **dadurch gekennzeichnet, dass** der mindestens eine Platin-Dünnfilmwiderstand (3a, 7a, 11a, 11a') des Heizelements (3,3', 7, 11, 11 ') weiter vom Keramikfolien-Laminat (1) oder vom Keramikbauteil (13a, 13b, 14a, 14b) entfernt angeordnet ist als der mindestens eine Platin-Dünnfilmwiderstand (2a, 8a) des Temperaturmesselements (2, 2', 8).

15. Strömungssensorelement nach Anspruch 14, **dadurch gekennzeichnet, dass** die Trägerfolien (2c, 3c, 7c, 8c, 11c) des mindestens einen Heizelements (3, 3', 7, 11, 11') und des mindestens einen Temperaturmesselements (2, 2', 8) beabstandet voneinander in Serie zwischen gleichen Keramikfolien oder Teilen des Keramikbauteils angeordnet sind.

16. Strömungssensorelement nach Anspruch 15, **dadurch gekennzeichnet, dass** das Keramikfolien-Laminat (1) aus zwei Keramikfolien (1a, 1b) gebildet ist.

17. Strömungssensorelement nach Anspruch 15, **dadurch gekennzeichnet, dass** das Keramikbauteil (13a, 13b, 14a, 14b) aus zwei Keramikrohren ( 13a, 14a; 13b, 14b), deren Wandungen im Querschnitt jeweils ein Halbmondprofil aufweisen, gebildet ist.

18. Strömungssensorelement nach einem der Ansprüche 15 bis 17, **dadurch gekennzeichnet, dass** ein Temperaturmesselement (2), zwei Heizelemente (3, 7; 11, 11') und ein Temperaturmesselement (8) in Serie angeordnet sind.

19. Strömungssensorelement nach Anspruch 14, **dadurch gekennzeichnet, dass** das Keramikfolien-Laminat (1) aus drei Keramikfolien (1a, 1b, 1c) gebildet ist.

20. Strömungssensorelement nach Anspruch 19, **dadurch gekennzeichnet, dass** die Trägerfolien (2c, 3c, 7c, 8c, 11c) des mindestens einen Heizelements (3, 3') und des mindestens einen Temperaturmesselements (2, 2') durch Keramikfolien (1b, 1c) beabstandet voneinander und parallel zueinander angeordnet sind.

21. Strömungssensorelement nach Anspruch 20, **dadurch gekennzeichnet, dass** ein Heizelement (3) zwischen einer ersten Keramikfolie (1a) und einer zweiten Keramikfolie (1b) und ein Temperaturmesselement (2) zwischen der zweiten Keramikfolie (1b) und einer dritten Keramikfolie (1c) der drei Keramikfolien (1a, 1b, 1c) angeordnet ist, wobei das Heizelement (3) und das Temperaturmesselement (2) auf gleicher Höhe des Keramikfolien-Laminats (1) nebeneinander angeordnet sind.

22. Strömungssensorelement nach Anspruch 20, **dadurch gekennzeichnet, dass** ein Heizelement (3) zwischen einer ersten Keramikfolie (1a) und einer zweiten Keramikfolie (1b) der drei Keramikfolien (1a, 1b, 1c) angeordnet ist und dass zwei Temperaturmesselemente (2, 2') zwischen der zweiten Keramikfolie (1b) und einer dritten Keramikfolie (1c) der drei Keramikfolien (1a, 1b, 1c) angeordnet sind, wobei das Heizelement (3) zwischen den Temperaturmesselementen (2, 2') angeordnet ist.

23. Strömungssensorelement nach Anspruch 14, **dadurch gekennzeichnet, dass** das Keramikfolien-Laminat (1) aus vier Keramikfolien (1a, 1b, 1c, 1d) gebildet ist.

24. Strömungssensorelement nach Anspruch 23, **dadurch gekennzeichnet, dass** ein erstes Temperaturmesselement (2) zwischen einer ersten Keramikfolie (1 a) und einer zweiten Keramikfolie (b) der vier Keramikfolien (1a, 1b, 1c, 1d) und ein zweites Temperaturmesselement (2') zwischen einer dritten Keramikfolie (1 c) und einer vierten Keramikfolie (1 d) der vier Keramikfolien (1a, 1b, 1c, 1d) angeordnet ist und dass ein Heizelement (3) zwischen der zweiten Keramikfolie (1b) und der dritten Keramikfolie (1c) angeordnet ist, wobei das Heizelement (3) und die Temperaturmesselemente (2, 2') auf gleicher Höhe des Keramikfolien-Laminats (1) nebeneinander angeordnet sind.

25. Strömungssensorelement nach Anspruch 23, **dadurch gekennzeichnet, dass** ein erstes Temperaturmesselement (2) zwischen einer ersten Keramikfolie (1a) und einer zweiten Keramikfolie (1b) der vier Keramikfolien (1a, 1b, 1c, 1d) und ein zweites Temperaturmesselement (2') zwischen einer dritten Keramikfolie (1c) und einer vierten Keramikfolie (1d) der vier Keramikfolien (1a, 1b, 1c, 1d) angeordnet ist und dass ein Heizelement (3) zwischen der zweiten Keramikfolie (1b) und der dritten Keramikfolie (1c) angeordnet ist, wobei die Temperaturmesselemente (2, 2') auf gleicher Höhe des Keramikfolien-Laminats (1) nebeneinander angeordnet sind und das Heizelement (3) versetzt zu den Temperaturmesselementen (2, 2') angeordnet ist.

26. Verwendung eines Strömungssensorelements nach einem der Ansprüche 1 bis 25 zur Massendurchflussmessung gasförmiger oder flüssiger Medien durch Rohrleitungen (12), wobei die Trägerfolien (2c, 3c, 7c, 8c, 11c) parallel zur Strömungsrichtung des Mediums angeordnet sind.

27. Verwendung nach Anspruch 26, **dadurch gekennzeichnet, dass** das gasförmige Medium eine Temperatur im Bereich von - 40°C bis + 800°C aufweist.

28. Verwendung nach einem der Ansprüche 26 bis 27, **dadurch gekennzeichnet, dass** das gasförmige Medium das Abgas einer Verbrennungskraftmaschine ist.

29. Verwendung nach Anspruch 26, **dadurch gekennzeichnet, dass** das flüssige Medium eine Temperatur im Bereich von 0°C bis 150°C aufweist.

30. Verwendung nach einem der Ansprüche 26 bis 29, **dadurch gekennzeichnet, dass** das Medium eine sich in zeitlichen Abständen ändemde Strömungsrichtung aufweist.
